Europäisches Patentamt

(19) **European Patent Office**

**Office européen des brevets**

(11) Publication number: **0 174 153**
**B1**

(12) **EUROPEAN PATENT SPECIFICATION**

(45) Date of publication of patent specification: **01.02.89**

(51) Int. Cl.⁴: **C 04 B 35/58**

(21) Application number: **85306087.9**

(22) Date of filing: **28.08.85**

(54) A silicon nitride sintered body and method of producing the same.

<table>
<tr><td>

(30) Priority: **07.09.84 JP 186287/84**

(43) Date of publication of application:
**12.03.86 Bulletin 86/11**

(45) Publication of the grant of the patent:
**01.02.89 Bulletin 89/05**

(84) Designated Contracting States:
**DE FR GB IT SE**

(56) References cited:
EP-A-0 107 919
DE-A-2 820 694

AMERICAN CERAMIC SOCIETY BULLETIN, vol.
59, no. 12, December 1980, pages 1212-1215,
Columbus, Ohio, US; A. GIACHELLO et al.:
"Sintering and properties of silicon nitride
containing Y2O3 and MgO"

CHEMICAL ABSTRACTS, vol. 90, no. 22, May
1979, page 316, no. 173509j, Columbus, Ohio,
US; & JP - A - 78 144 911 (DENKI KAGAKU
KOGYO K.K.) 16-12-1978

</td><td>

(73) Proprietor: **NGK INSULATORS, LTD.**
**2-56, Suda-cho, Mizuho-ku**
**Nagoya-shi, Aichi 467 (JP)**

(72) Inventor: **Matsui, Minoru**
**93 Yashirodai 1-chome Meito-ku**
**Nagoya-City (JP)**

(74) Representative: **Paget, Hugh Charles Edward**
**et al**
**MEWBURN ELLIS & CO. 2/3 Cursitor Street**
**London EC4A 1BQ (GB)**

(56) References cited:
CHEMICAL ABSTRACTS, vol. 99, no. 18,
October 1983, page 302, no. 144939e,
Columbus, Ohio, US; & JP - A - 58 95 659 (NGK
SPARK PLUG CO., LTD.) 07-06-1983

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 174 153 B1

**Description**

This invention relates to a sintered body consisting mainly of silicon nitride and a method of producing the same.

Silicon nitride sintered bodies are superior to metallic materials in mechanical strength at high temperature, heat resistance, thermal shock resistance, corrosion resistance and the like, so that they are under consideration for use for high temperature structural components, which cannot be made from metallic material, and the development of their applications is extensive.

EP—A—107919 describes sintered bodies containing silicon nitride and sintering aids selected from *inter alia* MgO and $Y_2O_3$. An oxygen-free atmosphere is used during sintering.

Since silicon nitride cannot easily be subjected to solid-phase sintering being a covalent bonded substance, it is subjected to liquid-phase sintering wherein additives such as $Y_2O_3$, $Al_2O_3$, MgO, $CeO_2$, $SiO_2$, $ZrO_2$, rare earth oxides, AlN and the like are added to silicon nitride and a glassy phase is formed at a sintering temperature to effect densification. Thus, the resulting sintered body contains a large amount of glassy phase produced during the sintering at its grain boundaries. Therefore, when such bodies are used in high temperature environments, the glassy phase at the grain boundary is softened, leading to degradation of static fatigue properties and oxidation resistance resulting from mechanical strength, creep deformation and creep rupture.

Consequetly, many studies have been made with respect to a method for crystallising intergranular phase without the formation of the glassy phase. In JP—A 55—3,397, there is disclosed a method, wherein silicon nitride with additions of $Y_2O_3$ and $SiO_2$ is fired to obtain a silicon nitride sintered body containing crystalline phases of $Y_2O_3.2SiO_2$ and $10Y_2O_3.9SiO_2.Si_2N_4$ in its grain boundary. In JP—A 56—59,674, there is disclosed a method, wherein silicon nitride has added to its $Y_2O_3$ and is then fired to obtain a silicon nitride sintered body containing a crystalline phase of $xY_2O_3.ySi_3N_4$ in its grain boundary. Further, in JP—A 59,8,670, a silicon nitride sintered body having an intergranular phase of melilite mineral facies represented by (Si, Mg, Y) (O, N) is disclosed. Furthermore, in JP—B 58—50,994, there is disclosed a method, wherein a silicon nitride sintered body containing $Y_2O_3$ or $CeO_2$ is reheated to form a crystal of $Y_2O_3.Si_3N_4$ or $CeO_2.Si_3N_4$ in the intergranular phase. These silicon nitride sintered bodies having crystallised intergranular phases all exhibit improved high temperature strength.

However, in order to decrease the glassy phase in the intergrannular phase causing the reduction of high temperature strength, it is required to restrict the composition of additives to the composition of the crystalline intergranular phase. With this in mind, an adequate amount of sintering aid to achieve densification cannot be included in the silicon nitride, so that a dense sintered body is not obtained. A dense silicon nitride sintered body may be obtained by hot press sintering even with a restricted composition of additives, but hot press sintering has the drawbacks that productivity is poor and components of complicated shape cannot be manufactured. Moreover, the crystallisation of the grain boundary is performed in an inert gas atmosphere during cooling from the sintering temperatures or reheating, so that the crystalline phase formed in the grain boundary is not always stable in an oxidising atmosphere which is the usual service condition. Consequently, when the sintered body is used in the oxidising atmosphere, the mechanical strength or oxidation resistance may appreciably deteriorate due to cracks produced by local changes of the volume of the crystalline phase at the grain boundary. The silicon nitride sintered bodies, wherein the greater part of the grain boundary is composed of crystalline phase, show neither creep deformation nor creep rupture under a static load at elevated temperatures owing to no softening of glassy intergranular phase, but produce static fatigue without any deformation due to subcritical crack growth accompanied by gradual growth of initial internal defects and eventually rupture after a certain time even under a stress smaller than that corresponding to an instant fracture strength such as flexural strength or the like. Such static fatigue properties can be estimated by stress dependence of the time till the rupture of the body. The subcritical crack growth resulting in the static fatigue is believed to be affected by various factors, such as the thermal and chemical stabilities and the mechanical strength of the intergranular phase, microstructural stress generated by difference in thermal expansion between intergranular phase and $Si_3N_4$ crystal grain during cooling from the sintering temperature, the degree of adhesion between the intergranular phase and the $Si_3N_4$ crystal grains, and the properties and amount of the remaining glassy phase. Therefore, silicon nitride sintered bodies having the crystallised intergranular phase have reduced reliability as components to be used under a stress for a long time, due to static fatigue rupture caused by the subcritical crack growth.

It is an object of the invention to reduce or eliminate the above-described drawbacks of the prior art. Particularly, an object of the invention is to specify the composition and microstructure of a highly dense silicon nitride sintered body having a substantially crystalline intergranular phase and exhibiting high strength at elevated temperatures and excellent static fatigue properties which result in neither creep deformation nor subcritical crack growth under static stress. To say more exactly, the aim is to provide, at least in some embodiments, a silicon nitride sintered body suffering no fracture under a static stress smaller than the stress corresponding to the instant fracture strength at a temperature of 1,000°C or below for longer than a given period of time or even for ever.

According to the invention, there is provided a silicon nitride sintered body consisting mainly of $Si_3N_4$ and containing Y, Mg and Ce, wherein the content of $Si_3N_4$ is 75—95% by weight, the content of Y is 2—15% by weight as $Y_2O_3$, the content of Mg is 1—10% by weight as MgO and the content of Ce is 1—10% by weight as $CeO_2$, in each case based on the weight of the sintered body.

According to the invention also, there is provided a method of producing a silicon nitride sintered body, which comprises molding a powdery mixture of 75—95% by weight of silicon nitride starting powder and Y-, Mg- and Ce-compounds as a sintering aid in amounts of 2—15% by weight of $Y_2O_3$, 1—10% by weight as MgO and 1—10% by weight as $CeO_2$, and then sintering the resulting molded body at a temperature of 1,650—1,800°C in a nitrogen or inert gas atmosphere. The silicon nitride sintered body according to the invention has a substantially crystalline intergranular phase.

The invention is based on the phenomena that a glassy phase comprising Y, Mg, Ce, Si, O and N within specified amount ranges is formed between $Si_3N_4$ crystal grains during the sintering step and effectively acts as a sintering aid at the densification step in liquid-phase sintering to provide a dense silicon nitride sintered body, and that the glassy phase in the grain boundary formed during the sintering changes into a thermally and chemically stable crystalline phase or a combination of at least two crystalline phases permitting a wide composition range inclusive of the composition of the glassy phase during cooling from the sintering temperature. By the invention it is possible to provide a silicon nitride sintered body having most excellent static fatigue properties without suffering creep deformation, subcritical crack growth and so on in the temperature range not exceeding 1,000°C.

Further explanation and examples of the invention are given below, with reference to the accompanying drawings, in which:

Fig. 1 is a diffraction pattern of the silicon nitride sintered body No. 5 embodying the invention described below, obtained by X-ray diffraction analysis using $CuK\alpha$ radiation;

Fig. 2 is an electron micrograph showing the grain structure of the silicon nitride sintered body No. 5; and

Fig. 3 is a graph showing the relation between static load stress and fracture time in silicon nitride sintered bodies Nos. 5 and 8 embodying the invention and Nos. 12 and 13 of Comparative Examples described below.

Hitherto, compounds of Y, Mg and Ce have been used alone or in combination of two of them, or together with another third ingredient, as a sintering aid. In these cases, each of the compounds of Y, Mg and Ce turns into its oxide, oxynitride and/or nitride in the sintered bodies, as in the silicon nitride sintered body according to the invention, and in partiuclar, Ce generally exists in the trivalent form. In the silicon nitride sintered body according to the invention, the combination of Y-, Mg- and Ce-compounds with the specified composition range developes a densification effect as a sintering aid equal to or more than that arising when such compounds are used alone or in combination of two of them, owing to the synergistic action of these three compounds. These compounds are converted into oxides, oxynitrides or nitrides during the sintering to form a glassy intergranular phase, which is easily densified in a nitrogen gas atmosphere under normal pressures through liquid phase sintering consisting of a rearrangement step and a dissolution precipitation step. However, the composition range of the silicon nitride sintered body according to the invention is not only a range capable of providing a highly dense silicon nitride sintered body, but significantly is chosen so that the Y-, Mg- and Ce-compounds converted into oxies, oxynitrides or nitrides react with the $Si_3N_4$ of the silicon nitride material powder and the $SiO_2$ usually contained therein to form a glassy phase consisting mainly of Y, Mg, Ce, Si, O and N in the grain boundary of the sintered body, a greater part or all of which is readily converted into a crystalline phase during cooling from the sintering temperature.

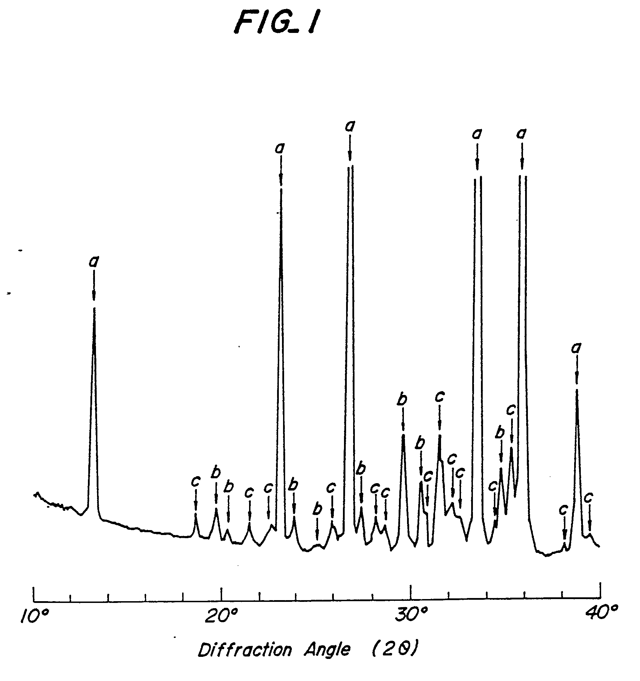

In Fig. 1 is shown an example of a diffraction pattern in a silicon nitride sintered body of the invention obtained by X-ray diffraction analysis with $CuK\alpha$ radiation. This silicon nitride sintered body exhibits principally diffraction lines assigned to $\beta$-$Si_3N_4$ as indicated by "a" in Fig. 1 as well as diffraction lines assigned to crystalline intrgranular phase as indicated by "b" and "c" in Fig. 1. Among these, the diffraction line indicated by "c" in Fig. 1 corresponds to that of $Si_3N_4 \cdot 10Y_2O_3 \cdot 9SiO_2$ shown in JCPDS Cards 30—1462. Additionally, there may be observed another diffraction line assigned to $\alpha$-$Si_3N_4$.

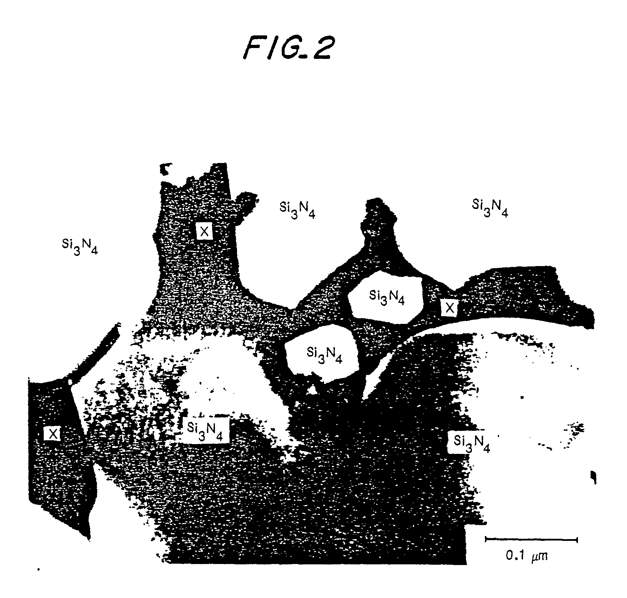

In Fig. 2 is shown a microstructure of a silicon nitride sintered body of the invention observed by means of an electron microscope. The grains denoted as "$Si_3N_4$" in Fig. 2 are $Si_3N_4$ crystal grains, while the other part as denoted by "X" in Fig. 2, i.e. the intergranular phase, is occupied by crystal grains causing electron diffraction, and hardly contains any glassy phase. It has been found that the crystalline intergranular phase contains Y, Mg, Ce and Si as cations, by an elemental analysis by an energy dispersion type X-ray elemental analyser under an electron microscope, and O and N as anions, by electron energy loss spectroscopy.

As described above, the intergranular phase of the silicon nitride sintered body of the invention is crystalline phases containing substantially no glassy phase as seen from the microstructure observed by the electron microscope, and exhibits clear diffraction lines in X-ray diffraction analysis. These crystalline intergranular phases cannot strictly be identified, but may be a single crystalline phase or a combination of two or more crystalline phases. In short, the illustrated silicon nitride sintered body according to the invention has an intergranular phase converted substantially into crystalline phase through the densification in the sintering step and cooling from sintering temperature, by incorporating Y, Mg and Ce within the specified composition range, which exhibits the X-ray diffraction lines as shown in Fig. 1 and the microstructure as shown in Fig. 2.

The silicon nitride sintered body according to the invention can have high mechanical strength and good oxidation resistance, and may be such as not to suffer creep deformation or subcritical crack growth under static stresses over a temperature range of from room temperature to 1,000°C. It may be capable of being held without fracture under a static stress smaller than the instant fracture stress for longer than a given period of time or even for ever. This is considered to be because the intergranular phase in the silicon nitride sintered body is substantially a crystalline phase wherein very little or no glassy phase exists, which crystalline phase is stable in an oxidising atmosphere over a temperature range of from room temperature to 1,000°C, and has a good adhesion to the $Si_3N_4$ grains, and also because the density of the sintered body is high.

On the other hand, in silicon nitride sintered bodies having a composition outside the composition ranges defined in the invention, if the content of $Si_3N_4$ exceeds 95% by weight, the amount of the sintering aid present in insufficient to achieve satisfactory densification, while if it is less than 75% by weight, the mechanical properties and heat resistance inherent to $Si_3N_4$ cannot be developed satisfactorily. Furthermore, when anyone of Y, Mg and Ce does not fall in the range specified in the invention, i.e. 2—15% by weight as $Y_2O_3$, 1—10% by weight as MgO and 1—10% by weight as $CeO_2$, their function as a sintering aid is not sufficiently obtained during sintering so that densification is not achieved or a large amount of glassy phase is left in the intergranular phase, or the resulting crystalline intergranular phase becomes unstable thermally and chemically and has poor adhesion to $Si_3N_4$ grains. Therefore, silicon nitride sintered bodies having a composition outside the composition ranges defined in the invention have poor mechanical strength, oxidation resistance and particularly static fatigue properties.

The method of producing a silicon nitride sintered body according to the invention will now be described in detail.

At first, 75—95% by weight of silicon nitride raw powder is blended by Y-, Mg- and Ce-compounds as sintering aids in respective amounts of 2—15% by weight as $Y_2O_3$, 1—10% by weight as MgO and 1—10% by weight as $CeO_2$. In the silicon nitride raw powder and the Y-, Mg- and Ce-compounds, the kind and amount of impurities vary depending upon their manufacturing processes. These impurities usually remain as a glassy phase in the intergranular phase of the silicon nitride sintered body, resulting in the deterioration of mechanical strength at elevated temperatures, heat resistance and static fatigue properties. Accordingly, it is preferred that each starting material has a purity of 96% by weight or more and particularly that the cationic impurities contained therein do not exceed 1% by weight. Since the Y-, Mg- and Ce-compounds turn into oxides, oxynitrides or nitrides in the sintered body, they may be used as salts, alkoxides and the like or in the form of solution, which can thereafter be converted into oxides. In this case, however, these compounds are subjected to a heat treatment in an oxidizing atmosphere, so that the $Si_3N_4$ raw powder is oxidized or the decomposition gas hindering the densification is generated. Therefore, it is rather preferable to employ oxide powders such as $Y_2O_3$, MgO and $CeO_2$.

The pulverizing and mixing of the starting material powders may be carried out by either a wet process with water or organic solvent or a dry process, using a vibration mill, rotary mill, attrition mill or the like. It is desirable to employ steel balls coated with nylon resin or silicon nitride procelain balls in order to prevent the incorporation of impurities due to the wearing of the ball used in the pulverization and mixing. The pulverizing time is dependent upon the pulverization system and the amount of the powders treated, but the pulverizing is preferably continued until constant saturated values of average particle size and BET specific surface area of the pulverized powder have been attained. The blend powder obtained by pulverizing and mixing, dried when the wet process is used, may be molded into a desired shape by an ordinary dry press molding, an extrusion molding, a slip cast molding, an injection molding, a combination of hydrostatic pressing therewith, or the like. Then, the molded body is sintered at a temperature of 1,650—1,800°C in a nitrogen gas atmosphere or an inert gas atmosphere for a sufficient time and cooled down to below 1,500°C to obtain a silicon nitride sintered body. However, a fully dense sintered body may not be obtained in the inert gas atmosphere because $Si_3N_4$ is apt to decompose and sublimate in this atmosphere, so that the use of the nitrogen gas atmosphere is preferable. Although the sintering may be carried out at more elevated temperatures to effect the densification under a pressurized nitrogen gas atmosphere while supressing the vaporization of $Si_3N_4$, the silicon nitride sintered body with the specified composition range according to the invention is sufficiently densified by sintering at 1,650—1,800°C in a pressureless nitrogen gas atmosphere, so that the sintering under the pressurized nitrogen gas atmosphere is not necessarily required in the invention. In the sintering under the pressureless nitrogen gas atmosphere, when the sintering temperature is lower than 1,650°C, the sintering is insufficient to conduct densification, while when it exceeds 1,800°C, the decomposition and vaporization of $Si_3N_4$ become so violent that a dense sintered body cannot be obtained. Furthermore, the intergranular phase in the silicon nitride sintered body according to the invention is substantially converted into a crystalline phase during cooling below 1,500°C from sintering temperatures after the sintering. Moreover, if the crystallization is insufficient due to the quick quenching or the like after the sintering, the intergranular phase can be fully converted into crystalline phase by re-heating at 1,500°C or below.

As mentioned above, the method of producing the silicon nitride sintered bodies according to the invention comprises steps of blending silicon nitride starting powder with Y-, Mg- and Ce-compounds at the predetermined blending ratio, molding the resulting blend and sintering it, so that the thus obtained silicon nitride sintered bodies have substantially crystalline phase in the intergranular phase and exhibit a high mechanical strength, a good oxidation resistance and, in particular, excellent static fatigue properties. The invention will be illustrated in details by the following examples.

Example

Silicon nitride starting powder having a purity of 97.1% by weight, an average particle size of 0.7 µm and a BET specific surface area of 20 m²/g was blended with $Y_2O_3$, MgO and $CeO_2$ starting powders each having a purity of 98—99% by weight, an average particle size of 0.6—2 µm and a BET specific surface area of 8—30 m²/g at composition ratios as shown in Table 1. Each was placed in nylon resin container of 1.2 l capacity together with 1.2 kg of silicon nitride procelain balls and 500 ml water based on 200 g of the blend and then pulverized by means of a vibration mill with vibration of 1,200 cycles/min for 10 hours. After water is evaporized, the pulverized mixture was granulated into grains for molding having a grain size of 100 µm. Subsequently, the grains were subjected to hydrostatic pressing under a pressure of 3 tons/cm² ($3 \times 10^2$ MPa) to form a molded body of 60×60×6 mm, which was subjected to pressureless sintering at temperature shown in Table 1 in a nitrogen gas atmosphere for 30 minutes to obtain each of silicon nitride sintered bodies No. 1—10 of the invention. Besides the above, silicon nitride sintered bodies No. 11—20 as a comparative example each having a composition outside the range defined in the invention were prepared under the same conditions as described the above. The result of chemical analysis on these sintered bodies shows that the compositions of Y, Mg and Ce in the silicon nitride sintered bodies No. 1—20 are substantially coincident with that of the starting blend. In Table 1 are also shown the properties of the sintered body such as bulk density, state of intergranular phase, four point bending strengths at room temperature and 1,000°C, and stress causing no fracture even under a static loading at 1,000°C for 100 hours and deformation accompanied therewith as static fatigue properties.

Table 1(a)

| | No. | Blend composition (wt%) | | | | Sinter-ing temp. (°C) | Bulk density (g/cm³) | State of intergranular phase | | Four point bending strength (MPa) | | Static fatigue properties 1,000°C, 100 hrs. | |
|---|---|---|---|---|---|---|---|---|---|---|---|---|---|
| | | $Si_3N_4$ | $Y_2O_3$ | MgO | $CeO_2$ | | | crystalline phase | glassy phase | room temp. | 1,000°C | stress causing no fracture (MPa) | deforma-tion amount (%) |
| Example | 1 | 94 | 2 | 3 | 1 | 1,800 | 3.2 | b,c | none | 690 | 670 | 650 | <0.1 |
| | 2 | 82 | 3 | 10 | 5 | 1,700 | 3.2 | b,c | none | 720 | 660 | 625 | <0.1 |
| | 3 | 90 | 4 | 1 | 5 | 1,700 | 3.2 | b,c | none | 680 | 640 | 625 | <0.1 |
| | 4 | 84 | 4 | 2 | 10 | 1,750 | 3.3 | b,c | none | 700 | 650 | 625 | <0.1 |
| | 5 | 88 | 6 | 4 | 2 | 1,750 | 3.2 | b,c | none | 690 | 660 | 650 | <0.1 |
| | 6 | 89 | 8 | 2 | 1 | 1,750 | 3.2 | b,c | none | 670 | 620 | 600 | <0.1 |
| | 7 | 83 | 8 | 4 | 5 | 1,700 | 3.3 | b,c | none | 750 | 690 | 675 | <0.1 |
| | 8 | 82 | 8 | 9 | 1 | 1,700 | 3.3 | b,c | none | 740 | 720 | 650 | <0.1 |
| | 9 | 83 | 10 | 2 | 5 | 1,800 | 3.2 | b,c | none | 710 | 660 | 625 | <0.1 |
| | 10 | 76 | 15 | 4 | 5 | 1,650 | 3.2 | b,c | none | 700 | 650 | 625 | <0.1 |

## Table 1(b)

| | No. | Blend composition (wt%) | | | | Sintering temp. (°C) | Bulk density (g/cm³) | State of intergranular phase | | Four point bending strength (MPa) | | Static fatigue properties 1,000°C, 100 hrs. | |
|---|---|---|---|---|---|---|---|---|---|---|---|---|---|
| | | $Si_3N_4$ | $Y_2O_3$ | MgO | $CeO_2$ | | | crystalline phase | glassy phase | room temp. | 1,000°C | stress causing no fracture (MPa) | deformation amount (%) |
| Comparative example | 11 | 87 | - | 10 | 3 | 1,700 | 3.2 | forsterite | presence | 740 | 450 | 225 | 0.4 |
| | 12 | 88 | 1 | 6 | 5 | 1,750 | 3.3 | forsterite | presence | 670 | 520 | 400 | 0.3 |
| | 13 | 88 | 4 | 8 | - | 1,700 | 3.0 | b,c,forsterite | presence | 700 | 680 | 425 | 0.2 |
| | 14 | 77 | 6 | 5 | 12 | 1,700 | 3.1 | b,c | presence | 690 | 420 | 350 | 0.3 |
| | 15 | 77 | 6 | 11 | 6 | 1,750 | 3.2 | b,c,forsterite | presence | 720 | 430 | 350 | 0.3 |
| | 16 | 88 | 8 | 4 | - | 1,750 | 2.9 | b,c | none | 580 | 520 | 425 | 0.1 |
| | 17 | 85 | 10 | - | 5 | 1,750 | 2.9 | b,c | none | 490 | 470 | 300 | 0.2 |
| | 18 | 79 | 16 | 4 | 1 | 1,700 | 3.0 | b,c | presence | 700 | 680 | 450 | 0.2 |
| | 19 | 97 | 1 | 1 | 1 | 1,800 | 2.6 | b,c | none | 430 | 400 | 300 | 0.1 |
| | 20 | 73 | 10 | 10 | 7 | 1,700 | 3.2 | b,c unidentifiable phase | presence | 650 | 380 | 250 | 0.3 |

The bulk density of the sintered body was measured by Archimedes' methods. The four point bending strength was measured in accordance with "Testing Method for Flexural Strength (Modulus of Rupture) of High Performance Ceramics" prescribed in JIS R—1601. The static fatigue properties were evaluated by inspecting whether or not the specimen of the same size as in the four point bending test is fractured under a given stress at 1,000°C for 100 hours in the same manner as in the four point bending test, and measuring the deflection amount of the four point test specimen as a deformation amount of the tensile surface. Further, the state of intergranular phase was evaluated from the results of X-ray diffraction analysis with CuKα radiation and electron microscrope observation, whereby it has been confirmed that crystals denoted as "b" and "c" in Table 1 exhibit diffraction lines indicated by "b" and "c" in Fig. 1 as mentioned later and that the microstructure includes a crystalline phases in addition to $Si_3N_4$. The forsterite has been identified with a compound formulated as $2MgO \cdot SiO_2$, while the unidentifiable phase means to include unidentified diffraction lines other than those indicated by "b" and "c" in Fig. 1. Furthermore, the presence of glassy phase was identified as a portion causing no electron diffraction in the microstructure.

The diffraction lines by X-ray diffraction analysis with CuKα radiation of the silicon nitride sintered body No. 5 of the examples above are shown in Fig. 1, wherein peaks indicated as "a" are of β-$Si_3N_4$, peaks "b" and "c" are of crystalline intergranular phases and, in particular, peaks "c" are coincident with interplanar spacing of $Si_3N_4 \cdot 10Y_2O_3 \cdot 9SiO_2$ shown in JCPDS Card 30—1462. The electron micrograph in the microstructure of silicon nitride sintered body No. 5 of the examples above is shown in Fig. 2, wherein portions indicated by "$Si_3N_4$" are $Si_3N_4$ crystal grains and portions indicated by "X" are crystalline intergranular phases causing electron diffraction, being free from glassy phase.

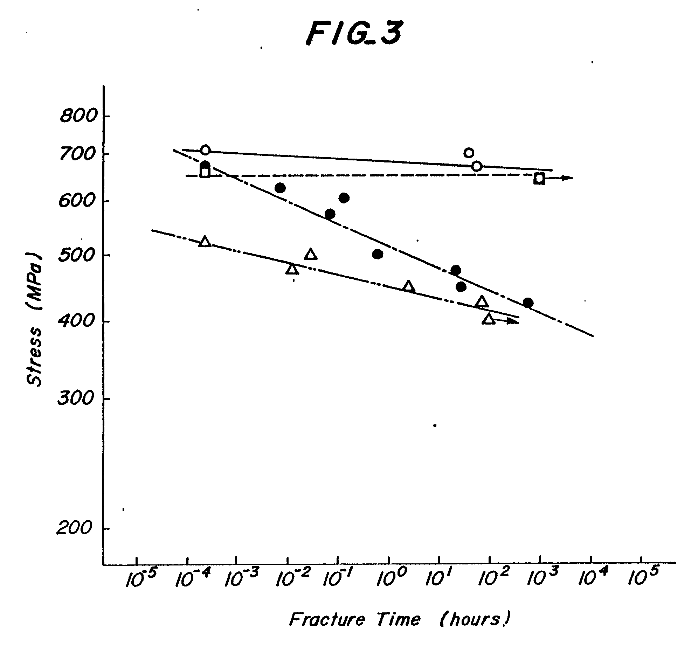

In Fig. 3, there is shown the time till fracture under the predetermined stress in the silicon nitride sintered bodies Nos. 5 and 8 of the examples as well as the sintered bodies Nos. 12 and 13 of the comparative examples having a composition outside the range specified in the invention, wherein symbol O is the case of the sintered body No. 8, symbol □ the case of the sintered body No. 5, symbol ● the case of the sintered body No. 13 and symbol △ the case of the sintered body No. 12. Such an instant fracture as in the four point bending strength is regarded as equivalent to fracture time of about $2 \times 10^{-4}$ hours and the arrow directed to the right from plots means that the specimen was still resisting without fracture at the time of stopping the measurement and had a longer fracture time.

As seen from Table 1 and Figs. 1, 2 and 3, the silicon nitride sintered bodies comprising $Si_3N_4$, $Y_2O_3$, MgO and $CeO_2$ in the composition range specified in the invention have a bulk density as high as not less than 3.2 $g/cm^3$, and contain a crystalline intergranular phase in its greater part of grain boundary, and have four point test bending strengths at room temperature and 1,000°C as high as not less than 670 MPa and not less than 620 MPa, respectively. Particularly, they have excellent the static fatigue properties at 1,000°C as compared with the silicon nitride sintered bodies having a composition outside the specified composition range, and undergoes neither fracture nor deformation for not less than 100 hours even under a stress of 600 MPa. Moreover, as is shown in Fig. 3, the silicon nitride sintered bodies Nos. 5 and 8 according to the invention do not cause fracture at 1,000°C under a stress of 650 MPa for not less than 1,000 hours.

As mentioned above, according to the invention, the silicon nitride sintered body can be produced by pressureless sintering with some synergistic effects of the predetermined amounts of $Si_3N_4$, Y, Mg and Ce, so that the resulting sintered body is high in density and mechanical strength and has excellent static fatigue properties. Since the silicon nitride sintered body according to the invention can be produced by pressureless sintering, the production cost is low and also the production of complicated configurations is possible, so that the sintered body is applicable to various uses as mechanical structure components such as parts of engines, parts of gas turbines and the like. In this case, because of excellent static fatigue properties of the sintered body according to the invention, the reliability on the service life of the components can be considerably improved.

**Claims**

1. A silicon nitride sintered body consisting mainly of $Si_3N_4$ and containing at least Y and Mg, characterized in that said body contains Y, Mg and Ce and the content of $Si_3N_4$ is 75—95% by weight, the content of Y is 2—15% by weight calculated as $Y_2O_3$, the content of Mg is 1—10% by weight calculated as MgO and the content of Ce is 1—10% by weight calculated as $CeO_2$, based on the weight of the sintered body, and the body has a substantially crystalline intergranular phase.

2. A method of producing a silicon nitride sintered body, which comprises molding a powdery mixture of silicon nitride starting powder and at least Y- and Mg-compounds, as sintering aid, and sintering the resulting molded body in an oxygen free atmosphere, characterized in that the powdery mixture is a mixture of 75—95% by weight of silicon nitride starting powder and Y-, Mg- and Ce-compounds as sintering aid in amount of 2—15% by weight calculated as $Y_2O_3$, 1—10% by weight calculated as MgO and 1—10% by weight calculated as $CeO_2$, and the resulting molded body is sintered at a temperature of 1,650—1,800°C in a nitrogen or inert gas atmosphere.

3. A method as claimed in claim 2 wherein said Y-, Mg- and Ce-compounds are $Y_2O_3$, MgO and $CeO_2$, respectively.

# EP 0 174 153 B1

4. A method according to claim 2 or claim 3 wherein pressureless sintering in a nitrogen atmosphere is used.

## Patentansprüche

1. Siliciumnitrid-Sinterkörper, der hauptsächlich aus $Si_3N_4$ besteht und mindestens Y und Mg enthält, dadurch gekennzeichnet, daß der Körper Y, Mg and Ce enthält und bezogen auf des Gewicht des Sinterkörpers der Gehalt an $Si_3N_4$ 75—95 Gewichtsprozent, der Gehalt an Y 2—15 Gewichtsprozent, berechnet als $Y_2O_3$, der Gehalt an Mg 1—10 Gewichtsprozent, berechnet als MgO, und der Gehalt an Ce 1—10 gewichtsprozent, berechnet als $CeO_2$, beträgt, und der Körper eine im wesentlichen Kristalline intergranulare Phase aufweist.

2. Verfahren zur Herstellung eines Siliciumnitrid-Sinterkörpers, bei dem eine pulverförmige Mischung aus Siliciumnitrid-Ausgangspulver und mindestens Y- und Mg-Verbindungen als Sinterungshilfe einer Formgebung unterzogen und der sich ergebende Formkörper in einer sauerstoffreien Atmosphäre gesintert wird, dadurch gekennzeichnet, daß die pulverförmige Mischung eine Mischung aus 75—95 Gewichtsprozent von Siliciumnitrid-Ausgangspulver und Y-, Mg- und Ce-Verbindungen als Sinterungshilfe in einer Menge von 2—15 Gewichtsprozent, derechnet als $Y_2O_3$, 1—10 Gewichtsprozent, berechnet als MgO, und 1—10 Gewichtsprozent, berechnet als $CeO_2$, ist und der sich ergebenden Formkörper bei einer Temperatur von 1650—1800°C in einer Stickstoff-oder Inertgasatmosphäre gesintert wird.

3. Verfahren nach Anspruch 2, bei dem die Y-, Mg- und Ce-Verbindungen $Y_2O_3$, MgO bzw. $CeO_2$ sind.

4. Verfahren nach Anspruch 2 oder 3, bei dem eine drucklose Sinterung in einer Stickstoffatmosphäre angewendet wird.

## Revendications

1. Corps fritté en nitrure de silicium consistant principalement en $Si_3N_4$ et contenant au moins Y et Mg, caractérisé en ce que ledit corps contient Y, Mg et Ce et la teneur en $Si_3N_4$ est de 75—95% en poids, la teneur de Y est de 2—15% en poids en calculant sous forme de $Y_2O_3$, la teneur de Mg est de 1—10% en poids en calculant sous forme de MgO et la teneur de Ce est de 1—10% en poids en calculant sous forme de $CeO_2$, en se basant sur le poids du corps fritté, et le corps a une phase intergranulaire sensiblement cristalline.

2. Procédé de fabrication d'un corps fritté en nitrure de silicium, qui consiste à mouler un mélange pulvérulent d'une poudre de départ de nitrure de silicium et au moins des composés de Y et Mg, comme auxiliaire de frittage, et à fritter le corps moulé résultant dans une atmosphère sans oxygène, caractérisé en ce que le mélange pulvérulent est un mélange de 75—95% en poids de poudre de départ de nitrure de silicium et des composés de Y, Mg et Ce en tant qu'auxiliaire de frittage en une quantité de 2—15% en poids en calculant sous forme de $Y_2O_3$, 1—10% en poids en calculant sous forme de MgO et 1—10% en poids en calculant sous forme de $CeO_2$, et le corps moulé résultant est fritté à une température de 1.650—1.800°C dans une atmosphère d'azote gazeux ou d'un gaz inerte.

3. Procédé selon la revendication 2 où lesdits composés de Y, Mg et Ce sont $Y_2O_3$, MgO et $CeO_2$ respectivement.

4. Procédé selon la revendication 2 ou 3 où le frittage sans pression dans une atmosphère d'azote est utilisé.

# FIG. 1

Diffraction Angle (2θ)

## FIG. 2

FIG.3

Stress (MPa)

Fracture Time (hours)

EP 0 174 153 B1